# EUROPÄISCHE PATENTSCHRIFT

(11) **EP 1 063 082 B1**
(45) Veröffentlichungstag und Bekanntmachung des Hinweises auf die Patenterteilung: **08.01.2003**
(21) Anmeldenummer: 99890168.0
(22) Anmeldetag: 25.05.1999
(51) Int. Cl.: B30B 5/02, B23Q 1/03, B23Q 1/25

(54) **Beschichtungspresse**
Coating press
Presse de revêtement

(43) Veröffentlichungstag der Anmeldung: 27.12.2000
(73) Patentinhaber: Firma Kochberger Renate, 3262 Wang (AT)
(72) Erfinder: Kochberger Andreas, 3262 Wang (AT)

(56) Entgegenhaltungen:
- EP-A- 0 507 033
- DE-A- 19 611 754
- DE-U- 9 012 791
- DE-U- 29 500 248
- US-A- 4 640 501
- US-A- 5 026 033
- US-A- 5 562 276

## Beschreibung

Die Erfindung betrifft eine Beschichtungspresse gemäß dem Oberbegriff des Hauptanspruches 1.

Um Formplatten, insbesondere mit Einfräsungen versehene Formplatten, die als Frontplatten im Möbelbau Verwendung finden, sowohl an der Oberfläche als auch den Rändern in einem Arbeitsgang mit Folie zu beschichten, werden Pressen verwendet, bei welchen die Werkstücke auf eine Unterlage aufgesetzt werden, deren Umfang gegenüber dem Rand des Werkstückes etwas zurückgesetzt ist. Dadurch kann sich die Folie nicht nur an der Oberfläche in die Einfräsungen einschmiegen, sondern auch an den Rändern nach Einwirkung von Über- und/oder Unterdruck nach unten ziehen und mit den Kanten glatt abschließen.

Es sind Pressen bekannt, bei welchen die Unterlagskörper entsprechend dem jeweiligen Werkstück gefertigt werden müssen. Dies ist für die Massenproduktion mit Werkstücken stets gleichbleibender Abmessungen durchaus eine geeignete Lösung.

Variieren die Abmessungen der zu verarbeitenden Werkstücke jedoch kurzfristig, insbesondere auch bei Sonderfertigungen, so müssen in diesen Fällen dann allerdings auch sehr viele unterschiedliche Unterlagen kurzfristig vorhanden sein. Das bedeutet einen enormen Arbeits- und Kostenaufwand.

Es sind auch Pressen bekannt, welche Auflagerteile verwenden, um die entsprechene Unterlage zu bilden.

So zeigt die DE 295 00 248 ein Auflagersystem für plattenförmige Werkstücke, wobei nach einem vorgegebenen Belegungsbild Auflagerstöpsel in Stecklöcher einsetzbar sind, um das Werkstück darauf abzulegen. Für jedes Werkstück muß allerdfings das Belegungsbild neu ermittel und hergestellt werden und kann auch, wie bei den vollen Unterlagen, nur einj Werkstück genau dieser Ausbildung tragen. Will man kurzfristig ein anderes Werkstück zusammen mit den pro Preßvorgang vorgesehenen Werkstücken beschichten, muß die Unterlage neu erstellt werden.

Dabei ist es ohne Bedeutung, ob das neue Werkstück kleiner oder größer als das vorgesehene Werkstück ist, in beiden Fällen kann die Unterlage nicht verwendet werden. Ist das neue Werkstück zu groß, wird es nicht ausreichend unterstützt und läuft Gefahr, zufolge zu hoher Flächendrücke abzubrechen. Ist es zu klein, verhindern die bereits gesetzten Stöpsel ebenfalls das ordnungsgemäße Beschichten der Ränder, da die Folie nicht vollständig nach unten gezogen werden kann.

Die PCT/DE97/00544 bzw. DE 196 11 754 A wiederum zeigt eine Beschichtungspresse, bei welcher der Legetisch eine Tischplatte mit rasterförmigen Durchtrittsöffnungen aufweist, in welche bewegliche Träger eingesetzt sind. Diese Träger können aus der Tischplatte ausgefahren werden, um das Werkstück gegenüber dieser abzuheben. Weiters sind Sensoren vorgesehen, welche die Größe und Lage des Werkstückes ermitteln. Über Anlenkschwingen werden die Träger betätigt und das jeweilige Belegungsbild erstellt.

Allerdings erfolgt die Abtastung der Werkstücke Trägerreihe um Trägerreihe, ehe sie hochgefahren werden können. Das verbraucht sehr viel Zeit und wirkt einer raschen Fertigung eher entgegen.

Darüberhinaus erfordert die Vorrichtung einen komplizierten und teuren Steuermechanismus. Zusätzlich wird die Variierbarkeit der Werkstücke durch die auf den Trägern aufliegenden, verhältnismäßig großen, Trägerplatten auch noch einschränkt.

Aufgabe der Erfindung ist es, eine Presse zur mehrseitigen Folienbeschichtung von Formplatten zu schaffen, welche die Nachteile der bekannten Lösungen vermeidet und Unterlagen für jedes beliebige Werkstück rasch und kostengünstig zur Verfügung stellt.

Darüberhinaus soll die Erfindung auch eine Lösung zur Verfügung stellen, welche in bereits auf dem Markt befindliche Maschinen nachgerüstet werden kann.

Die Erfindung löst die Aufgabe dadurch, daß jeder Einzelträger zur Aufnahme der Werkstücke innerhalb eines Bewegungsbereiches auf dem Preßtisch horizontal bewegbar angeordnet ist und jeder Einzelträger während des Preßvorganges eine Verkürzung seiner Höhe erfährt. Der jedem Einzelträger zugeordnete Bewegungsbereich gestattet deren Anordnung derart, daß Werkstücke beliebiger Größenordnung beschichtet werden können, ohne vorher ein Belegungsbild festlegen zu müssen. Es genügt das Auflegen der Werkstücke und das anschließende Zurechtrücken der Einzelträger an den Außenkanten der Werkstücke. Dies kann rasch und effizient erfolgen, weil kein exakter Abstand eingehalten werden muß. Während des Preßvorganges erfolgt auch eine für diesen vorteilhafte Verkürzung der Höhe jedes Einzelträgers. Das ist insbesondere deshalb vorteilhaft, weil ein anfangs höherer Einzelträger das Werkstück einerseits näher an die Heizvorrichtung bringt, wodurch die Strahlungswärme einerseits die zu folierenden Teile vorwärmt, was höhere Kantenfestigkeit und Flächenfestigkeit garantiert, und anderseits eine Verkürzung der Vorheizzeit ermöglicht, da die Folie zufolge des schon erwärmten Werkstückes nicht mehr entsprechend hoch erhitzt werden muß. Weiters erfolgt das Folieren im Arbeitsschritt Vakuumziehen bei entsprechend hoher Anordnung der Werkstücke klaglos, weil sich die Folie gut über die Kanten ziehen kann. Beim anschließenden Anlegen von Druck wiederum ist eine geringere Höhe vorteilhafter, um Folierproblemen in den Eckbereichen, insbesondere Faltenwurf oder Materialriß, auszuweichen. Eine Verkürzung der Höhe der Einzelträger während des Preßvorganges bedeutet daher einen großen Schritt in eine vereinfachte Arbeitsweise.

Grundsätzlich kann jeder Bewegungsbereich um jeden Einzelträger beliebige Größe aufweisen. Insbesondere für das Erstellen von Spezialwerkstücken oder auch bei besonderen Aufgaben kann sich diese Lösung als günstig erweisen. Als Beispiele seien hier das Glasrahmenpressen bzw. das Rahmenpressen an sich, das Folieren von Rundteilen oder auch von Vielecken genannt.

Für die Herstellung von Normteilen oder auch einfachen rechteckigen Werkstücken, wie beispielsweise Möbelfronten ist der Bewegungsbereich um jeden Einzelträger vorteilhafterweise gleich groß. Ebenso können die Abstände einander benachbarter Bewegungsbereiche jeweils gleich groß sein. Es wird dadurch ein symmetrisches Bild mit einem einheitlichen Minimal- und einem Maximalabstand der Einzelträger zueinander festgelegt. Wie auch immer ist es notwendig, einen Minimalabstand einander benachbarter Bewegungsbereiche, was auch einen Minimalabstand benachbarter Einzelträger definiert, nicht zu unterschreiten. Eine derartige Anordnung stellt das klaglose Beschichten der Werkstück-Seitenflächen rasch in Frage. Derartigen Mißständen kann durch das Vorsehen eines Minimalabstandes entgegengewirkt werden.

Erfindungsgemäß ist vorgesehen, daß jeder Einzelträger idente Länge aufweist und aus einem Schaft, einem Sockel und einer auf dem Sockel aufruhenden Deckschicht besteht. Vorteilhafterweise sind Schaft und Sockel aus starrem Material, beispielsweise Kunststoffen wie Polyamid oder Zellamid, oder auch aus Aluminium gefertigt, wohingegen die Deckschicht aus elastischem Material besteht, um eine Verkürzung der Höhe der Einzelträger während des Preßvorganges zu ermöglichen. Die Deckschicht vermeidet auch einen direkten Kontakt der Werkstück-Unterseite mit dem starren Material des Sockels, das einerseits für die Aufnahme der hohen Preßdrücke nicht optimal ist und anderseits in Folge auch zu einer Beschädigung der Werkstück-Unterseite führen könnte. Daher ist an der Sockeloberseite eine Deckschicht aus elastischem Material vorgesehen. Dieses Material kehrt nach aufgebrachtem Preßdruck jeweils in seine ursprüngliche Position zurück und ist geeignet, sehr viele solcher Federwege unter Einwirkung von sowohl hohem Druck als auch hoher Temperatur zu bestehen. Durch Vorsehen dieser Deckschicht wird es nun auch möglich, das Werkstück bei Einsetzen des Vakuumziehens von unten in einer entsprechenden Höhe anzuordnen, um ein reibungsloses Folieren auch in den Eckbereichen zu ermöglichen, das heißt, ohne Faltenwurf zu verursachen. Das Folieren erfolgt dabei während des Vakuumaufbaus. Gleichzeitig mit Erreichen des maximalen Vakuums erreicht die Deckschicht ihre minimale Höhe, ist also maximal zusammengepreßt. Wenn anschließend der Druck einsetzt, um das Verfahren fortzuführen, ist der Abstand Werkstück-Unterlagsplatte somit so gering geworden, daß auch hoher Druck die Folie nicht mehr platzen oder abreißen lassen kann.

Herkömmliche Vorrichtungen können stets nur einen Mittelwert bei bekannten Foliereigenschaften der verwendeten Folien schaffen und fahren somit unter weit größerer Gefahr, Ausschuß zu produzieren, sei es durch Folienverletzung oder auch unsachgemäße Folierung.

Um ein Verrutschen des Werkstückes zu vermeiden, ist die Deckschicht mit einer haftenden Oberfläche versehen.

Nach einer vorteilhaften Ausbildung erweitert sich der Schaft von der Deckschicht zum Sockel hin und weist vorzugsweise die Form eines Pyramidenstumpfes oder eines Kegelstumpfes auf. Diese Ausführung unterstützt das problemlose Ablösen der Folie von den Einzelträgern nach dem Preßvorgang.

Nach einem Merkmal der Erfindung ist jeder Einzelträger in einer auf dem Preßtisch aufruhenden Führungsplatte bewegbar angeordnet, wobei jeweils der Sockel der Einzelträger von Führungstaschen in der Führungsplatte aufgenommen ist. Diese Führungstaschen sind dermaßen gestaltet, daß eine Bewegung jedes Einzelträgers über den gesamten ihm zugeordneten Bewegungsbereich möglich ist. Indem die Auflagefläche des Sockels größer als der dem Einzelträger zugeordnete Bewegungsbereich ist, ist eine klaglose Führung ohne ein zufälliges Herauslösen des Einzelträgers garantiert.

Nach einer bevorzugten Ausbildung ist die Auflagefläche des Sockels rechteckig ausgeführt. Jedoch sind auch solche Ausführungen mit abgerundeten Ecken bzw. vollständig runde Ausführungen einsetzbar. Abgerundete Elemente sind insbesondere für den Fall, in welchem sich der Sockel in der Führung auch verdrehen läßt, von Bedeutung, um ein Verklemmen des Einzelträgers in den Führungstaschen hintanzuhalten und damit eine temporäre Unbeweglichkeit zu vermeiden. Darüberhinaus kann ein nicht abgerundeter Sockel in Schrägstellungen gelangen, aus welchen er gegebenenfalls nicht mehr die Eckbereiche des Bewegungsraumes erreichen kann.

Das würe eine Einschränkung seiner Stellungsmöglichkeiten bedeuten. Durch die erwähnten runden Ausführungsformen wird diese Eventualität vermieden.

Nach einer zweiten Ausführungsform der Erfindung ist vorgesehen, daß der Sockel des Einzelträgers in der Führungstasche federnd gehalten ist. Dies wird erfindungsgemäß nach einer bevorzugten Ausbildung dadurch erreicht, daß eine in der Führungstasche angeordnete Kombination aus Feder und Federplatte zur Aufnahme des Sockels vorgesehen ist, wobei die Anordnung der Feder zentral erfolgt.

Bei dieser zweiten Ausführungsform erstreckt sich der Schaft baubedingt höher nach oben, was bedeutet, daß die Werkstücke beim Beschichtungsvorgang vorteilhafterweise noch näher an die Heizvorrichtung der Beschichtungepresse gerückt werden.

Die zu kaschierenden Teile werden durch die von der Heizplatte abgegebene Strahlungswärme vorerwärmt. Die über den Werkstücken angeordnete Folie wird rascher erwärmt, woduch die Verfahrensdauer verkürzt wird.

Aus dieser Konstellation resultieren sowohl höhere Kantenfestigkeit als auch Flächenfestigkeit und damit eine bessere Haltbarkeit der erzeugten Werkstücke.

Bei dieser zweiten Ausführungsform verändert nach Anlegen des Vakuums die Feder ihre Lage und verändert den Abstand Werkstück-Preßtischauflage. Die elastische Deckschicht der Einzelträger wird dabei kaum mitwirken, dient allerdings der vorteilhaften Vermeidung von Beschädigungen der Werkstück-Unterseite bei Aufbringen von Druck.

In einer Weiterbildung ist auch vorgesehen, daß mehrere Federn vorzugsweise in den Eckbereichen der Federplatte angeordnet sind.

Ein weiterer Vorteil der federnden Anordnung der Einzelträger ergibt sich aus der Tatsache, daß jeder Einzelträger aus seiner Führungstasche durch Kippen leicht herausgelöst werden kann. Insbesondere bei Beschädigung eines Einzelträgers oder auch bei deren allgemeinen Erneuerung kann diese Arbeit sehr vereinfacht durchgeführt werden.

Für jede der Ausführungsformen ist erfindungsgemäß weiters vorgesehen, daß über der Führungsplatte eine Matrize mit Ausnehmungen vorgesehen ist, welche die Bewegungsbereiche der Einzelträger definieren. Gleichzeitig dient diese Matrize auch dazu, ein ungewolltes Herausgleiten der Einzelträger aus den Führungstaschen beim Justiervorgang zu vermeiden, wenngleich auch Ausführungen denkbar sind, bei welchen sich eine Seite des Sockels bei maximaler Verschiebung bereits innerhalb des Bewegungsraumes befinden kann. In solchen Fällen ist insbesondere auf das Material der Matrize zu achten, damit dieses unter Belastung sich nicht verformt oder bricht, da es keine Unterstützung durch den Sockel erfährt. Im allgemeinen besteht die Matrize, wie auch die Führungsplatte und die Federplatte aus einem atmungsaktiven Preßfasermaterial. Nach einer Variante können diese Teile, falls es ihre benötigte Festigkeit fordert, vorzugsweise aus Aluminium oder Kunststoff bestehen. Bei dieser Variante sind eine Vielzahl von Bohrungen zum Durchtritt des Vakuums vorgesehen. Ohne diese Durchtrittsöffnungen wäre ein progressives Beschichten der Werkstücke behindert. Atmungsaktive Werkstoffe benötigen solche Öffnungen nicht, da sie für das Vakuum logischerweise genügend durchlässig sind.

Die durch die Einzelträger vorgegebene gemeinsame Höhe ist allerdings nicht für alle Beschichtungmaterialien gleich gut geeignet. So werden zum Beschichten von Formteilen durchaus auch Materialien verwendet, welche schon zu Beginn des Preßvorganges einen geringeren als den üblicherweise vorgesehenen Abstand zum Boden verlangen, da der eintretende Druck sonst zu hoch ist und in Folge ein Zerreißen des Materials droht. Bei solchen Randbedingungen erfolgt gemäß der Erfindung eine Verkürzung der wirksamen Höhe der Einzelträger durch Einlage einer über der Matrize angeordneten Zwischenplatte. Die Einzelträger selbst müssen zu diesem Zweck weder verändert noch ausgetauscht werden. Auch die Zwischenplatte ist mit Ausnehmungen versehen, welche mit den Ausnehmungen der Matrize korrespondieren und die Bewegungsbereiche der Einzelträger definieren. Eine Einschränkung der Bewegungsbereiche erfolgt somit nicht. Falls gewünscht - in Abhängigkeit von Werkstücken oder Folienmaterial kann dies aber erfolgen.

Nach einer weiteren Ausbildung der Erfindung ist über der Matrize eine vorzugsweise elastische Füllstoffabdeckung vorgesehen, welche mit ihrer Oberfläche mit der Deckschicht jedes Einzelträgers bündig abschließt. Als Material dieser Füllstoffabdeckung kann jedes temperaturbeständige verwendet werden. Insbesondere eignen sich Zellkautschuk oder Bulpren.

Zweck der Verwendung einer solchen Füllstoffabdeckung ist der gewünschte Einsatz eines höheren Preßdruckes, das parallel mit einem stärkeren Vorheizen stattfinden kann, woraus wiederum eine höhere Kantentemperatur der gefertigten Werkstücke mit sich bringt. Eine solchermaßen beschichtete Formplatte kann vorteilhafterweise auch dieser höheren Temperatur ausgesetzt werden, ohne das sich die Folie vom Formteil ablöst, was wiederum ein höherwertiges Endprodukt bedeutet.

Nach erfolgtem Vakuumziehen sieht das Preßverfahren einen Verzögerungszeitraum vor, ehe als weiterer Verfahrensschritt Druck aufgebracht wird, um ein Zerplatzen der auf den Einzelträgern aufliegenden Folie zu vermeiden. Dieser Zeitraum kann durch Verwendung der elastischen Füllstoffabdeckung verkürzt werden.

Weiters stabilisiert eine solche Füllstoffabdeckung das System und vermeidet ein Rutschen der Werkstücke.

Um ein Einschränken der Bewegung der Einzelträger auch bei dieser Ausführungsform zu ermöglichen, ist auch die Füllstoffabdeckung mit Ausnehmungen versehen, welche mit den Ausnehmungen der Matrize korrespondieren und die Bewegungsbereiche der Einzelträger definieren.

Um den Überstand der Werkstücke besser und rascher einrichten zu können, sind nach einer Weiterbildung der Erfindung an der Oberfläche der Füllstoffabdeckung Markierungslinien vorgesehen, welche die Außenkanten benachbarter, in einer Linie laufender Ausnehmungen verbinden.

Eine andere Weiterbildung er Erfindung schlägt vor, daß Aufsteckteile für die Einzelträger vorgesehen sind. Dies ist insbesondere für das Folieren extremer Schmalteile von enormer Bedeutung, welche auch bei Minimalstellung der Einzelträger ein Aufruhen der Werkstücke nicht zulassen. Als Beispiel wird das Folieren von Rahmen genannt. Es wird somit eine Möglichkeit aufgezeigt, um die Auflagefläche für diese Werkstücke zu vergrößern.

Dabei ist erfindungsgemäß vorgesehen, daß ein Aufsteckteil den gesamten Einzelträger umfaßt und daß es an seiner Oberseite mit der Deckschicht bündig abschließt.

Um die Federwirkung der die Einzelträger tragenden Federn nicht hintanzuhalten ist vorgesehen, daß der Aufsteckteil in seinem oberen Bereich einen elastischen Abschnitt aufweist, welcher von größerer Dicke als die elastische Deckschicht des Einzelträgers ist. Darüberhinaus ist das Material des elastischen Abschnittes auch elastischer als jenes der elastischen Deckschicht. Damit ist gewährleistet, daß bei Anlegen des Vakuums ein relativ rasches Zusammendrücken des elastischen Abschnittes bis auf Höhe der elastischen Deckschicht erfolgt und darüberhinaus die Feder wieder zu ihrem erfindungsgemäßen Einsatz kommt.

Es ist nach einer Weiterbildung der Erfindung auch vorgesehen, daß zwischen benachbarten Ausnehmungen in der Matrize weitere Ausnehmungen zur Regulierung der Zugbeanspruchung der Folie vorgesehen sind. Insbesondere soll damit vermieden werden, daß die über die Werkstücke gezogene Folie Falten wirft. Dieses Problem tritt insbesondere bei ziemlich ungleichmäßiger Belegung des Preßtisches auf. Derartige Ausnehmungen unterliegen keiner Beschränkung der Form.

Um die enorme Zugbelastung in den Eckbereichen des Preßtisches hintan zu halten, sind nach einer Ausbildung der Erfindung in diesen Eckbereichen Formteile angeordnet. Insbesondere haben diese vorteilhafterweise dreieckförmigen Querschnitt.

Dadurch wird die Kantenwirkung gemildert und die Zugbelastung in diesem Bereich reduziert. Zu hoher Druck in diesen Bereichen kann zu einem Zerplatzen der Folie oder zu ihrem Verfarben führen, wobei sich die Verfärbung bis in das nächstgelegene Werkstück ziehen kann, welches dann nur noch Ausschuß ist.

Idealerweise ist jeder Formteil an seiner den Ecken des Preßtisches abgewandten Seite mit wenigstens einer Einfräsung versehen, um einen sanften Übergang zu schaffen und die Zugkräfte nochmals zu senken.

Die Erfindung betrifft auch ein Verfahren zum mehrseitigen Folienbeschichten von Formplatten in einer Beschichtungspresse nach einem oder mehreren der vorgenannten Merkmale, wobei in einer Preßkammer die über den am Preßtisch aufruhenden Formplatten angeordnete Folie erst erhitzt und dann mittels Anlegen von Vakuum und Druck foliert werden

Dieses Verfahren soll ein rascheres und efizienteres Arbeiten ermöglichen, als dies von bekannten Verfahren vorgegeben ist.

Die Erfindung löst die Aufgabe dadurch, daß die zu beschichtenden Werkstücke beabstandet voneinander auf die Einzelträger aufgelegt werden, wonach die sich in den Randbereichen der Werkstücke befindlichen Einzelträger in ihren Bewegungsbereichen solange verschoben werden, bis die korrespondierenden Einzelträgers gegenüber den Rändern der Werkstücke entsprechend zurückgesetzt sind, und daß nach Einfahren des Preßtisches in die Preßkammer über die Periode des Vakuumziehens der Abstand Werkstücke-Preßtischauflage verringert wird. Nachdem über die Periode des Vakuumziehens genügend Platz für das seitliche Folieren der Formplatten vorhanden war wird anschließend durch das Verringern des Abstandes der Raum derart gering gehalten, daß bei Anlegen des Druckes dieser die Folie nicht mehr abreißen oder platzen lassen kann.

Ein weiterer Vorteil wird dadurch erreicht, daß zwischen abgeschlossenem Vakuumziehen und darauffolgendem Anlegen von Druck ein Verzögerungszeitraum vorgesehen ist. Auch dieser Verfahrensschritt unterstützt die Stabilisierung des Foliervorganges. Folienbereiche, welche nicht auf Werkstücken, sondern nur auf den Einzelträgern aufliegen, neigen im allgemeinen bei zu raschem Anlegen von Druck zum Zerreißen. Der vorgesehene Verzögerungszeitraum minimiert diese Tendenz beträchtlich.

Nach einer Weiterbildung der Erfindung ist auch vorgesehen, daß bei größeren Leerbereichen zwischen aufgelegten Werkstücken in diesen Leerbereichen Formstücke angeordnet werden, um ein günstigeres Spannungsverhalten der Folie zu erzielen.

Üblicherweise werden die Werkstücke vor dem Auflegen auf den Preßtisch an den zu folierenden Seiten mit Kleber versehen und dieser leicht angetrocknet. Kommen nun beispielsweise selbstklebende Folien zum Einsatz, kann dieser Schritt unterbleiben. Sämtliche Einzelträger wie auch der Preßtisch werden dann allerdings mit einem Trennmittel versehen, um nach erfolgtem Preßvorgang die Folie auch wieder abziehen zu können.

Die Erfindung wird nun in ihren Ausführungsformen anhand von Zeichnungen näher beschrieben. Es zeigen:
Fig. 1 eine Seitenansicht einer ersten Ausführungsform eines Preßtisches im Schnitt,
Fig. 2 eine Draufsicht auf einen belegten Preßtisch in einer Teilansicht,
Fig. 3 eine Detaildarstellung eines im Preßtisch angeordneten Einzelträgers,
Fig. 4 eine Weiterbildung der Ausführung nach Fig. 1 in einem Ausschnitt,
Fig. 5 eine andere Weiterbildung der Ausführung nach Fig. 1 in einem Ausschnitt,

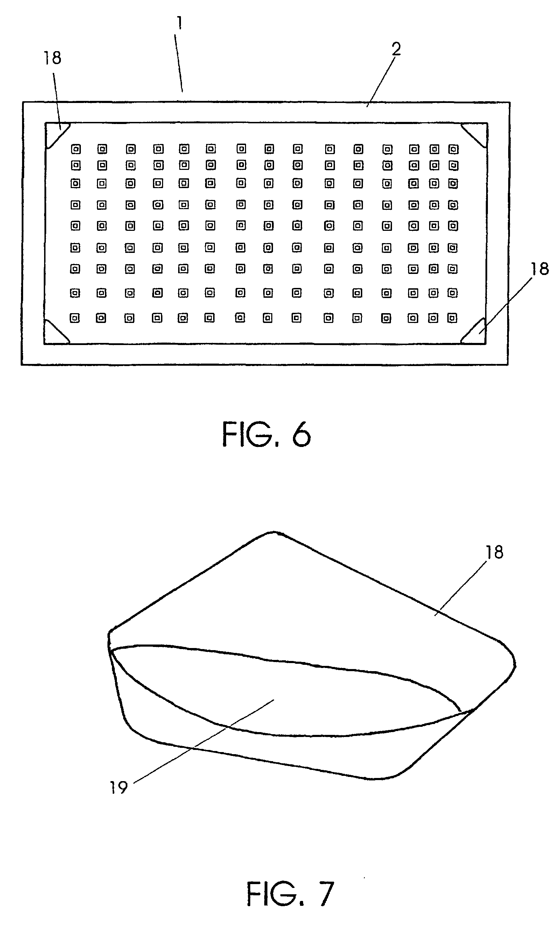

Fig. 6 eine Draufsicht auf einen Preßtisch mit eingelegten Formteilen in schematischer Darstellung,
Fig. 7 eine Detaildarstellung eines Formteiles gemäß Fig. 6,
Fig. 8 eine Seitenansicht einer zweiten Ausführungsform eines Preßtisches im Schnitt und
Fig. 9 einen Schnitt durch die Anordnung eines Einzelträgers mit Aufsteckteil.

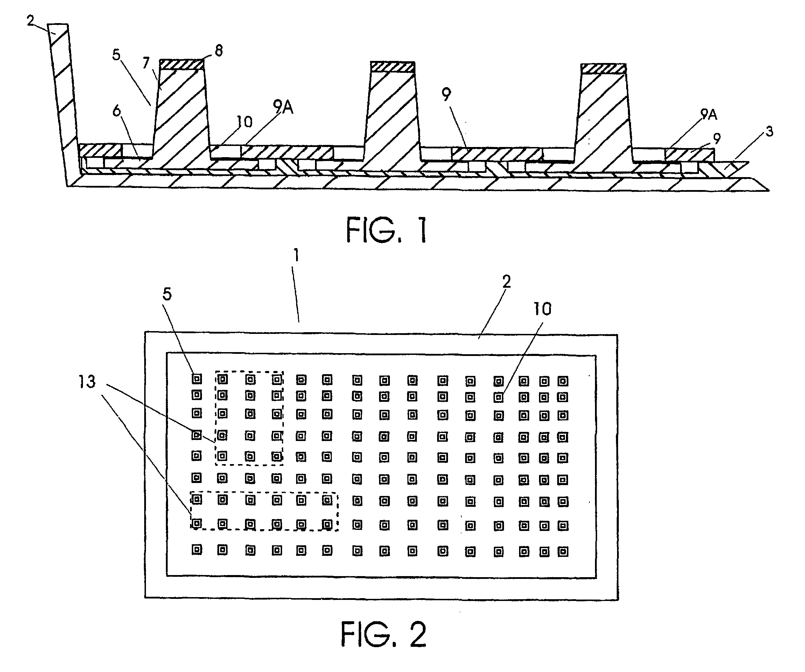

Fig. 1 zeigt den Preßtisch 1, der eine Wanne 2 und in dieser angeordnete Elemente zur Aufnahme der Formplatten. Direkt über der Bodenfläche der Wanne 2 ist eine Führungsplatte 3 mit einer Vielzahl von Führungstaschen 4 zur Aufnahme und Führung der Einzelträger 5 vorgesehen. Jeder der Einzelträger 5 besteht aus einem Sokkel-6, der in den Führungstaschen 4 beweglich angeordnet ist, und aus einem Schaft 7, an den eine elastische Deckschicht 8 anschließt. Sowohl der Sockel 6 als auch der Schaft 7 bestehen aus einem starren Material wie Metall oder Kunststoff. Die Deckschicht 8 hingegen ist aus einem elastischen und rutschfesten Material gefertigt, das der regelmäßigen Wechselbelastung beim Pressen über viele Zyklen standhalten kann, ohne dadurch Schaden zu nehmen. Darüberhinaus ermöglicht diese elastische Deckschicht eine Verringerung der relativen Schafthöhe beim Pressen. So verringert sich aus diesem Grund der Abstand Formplatte - Führungsplatte 3 während des Vakuumziehens dermaßen, daß in Folge beim Anlegen des Druckes der Abstand schon entsprechend klein ist, um eine Zerstörung der Folie durch zu großen Druck hintanzuhalten. Der Schaft 7 erweitert sich gegen den Sockel 6 hin, um ein leichtes Ablösen der Folie zu gewährleisten. Über der Führungsplatte 3 ist eine Matrize 9 mit Ausnehmungen 9A vorgesehen, durch welche sich die Schäfte 7 der Einzelträger nach oben erstrecken. Die Ausnehmungen 9A bilden dabei Bewegungsbereiche 10, innerhalb welcher die Einzelträger 5 bewegbar sind. Darüberhinaus deckt die Matrize 9 die Führungstaschen 4 teilweise ab und bildet dabei einen Teil der Sockelführung, indem sie das Herauskippen der Sockel 6 vermeidet. Jeder Sockel 6 kann über den gesamten Bewegungsbereich 10 innerhalb der Ausnehmungen 9A bewegt werden.

Der im allgemeinen mit rechtwinkeliger Grundfläche ausgebildete Sockel 6 kann für eine bessere und komplettere Beweglichkeit in seiner Führungstasche 4 auch mit abgerundeten Ecken oder auch ganz rund ausgebildet werden. Diese Form ist insbesondere bei einer Verdrehung des Sockels vorteilhaft, um trotz dieser Stellung auch noch die Eckbereiche des Bewegungsbereiches 10 ausnützen zu können. Damit ist sowohl ein Verschieben als auch ein Verdrehen des Einzelträgers 5 in den Führungstaschen 4 über den gesamten Bewegungsbereich 10 möglich.

Die Einzelträger 5 können in der Führungsplatte 3 je nach Auftrag mit beliebigen Abständen angeordnet werden. Für die Produktion im wesentlichen rechteckiger Formplatten ist die Ausbildung gleich beabstandeter Führungstaschen 4 vorzuziehen.

Dadurch wird ein Maximal/Minimalabstand der Einzelträger 5 definiert.

Ein auf die Einzelträger 5 aufgelegtes Werkstück 13 ist in Fig. 2 dargestellt.

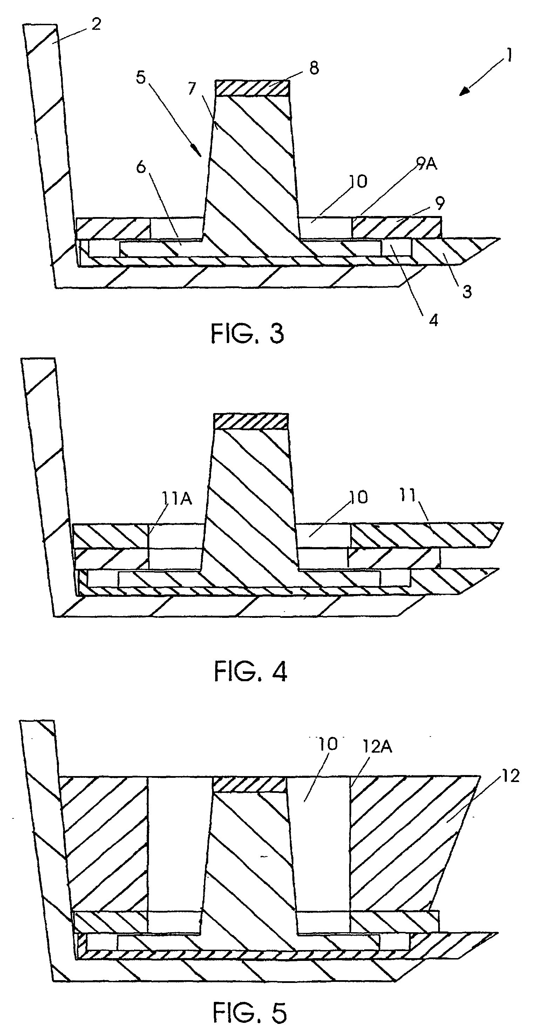

In Abhängigkeit von den Materialeigenschaften der Beschichtungsfolie kann eine Verkürzung der wirksamen Sockelhöhe der Einzelträger 5 notwendig sein. Zu diesem Zweck ist, wie in Fig. 4 dargestellt, eine Zwischenplatte 11 über der Matrize 9 angeordnet. Auch diese Zwischenplatte 11 weist Ausnehmungen 11A auf, welche mit den Ausnehmungen 9A der Matrize 9 korrespondieren und damit wieder Bewegungsbereiche 10 definieren.

Zur weiteren Reduktion der Sockelhöhe wird eine über der Matrize 9 angeordnete Füllstoffabdeckung 12 vorgesehen, deren Oberfläche mit der Deckschicht 8 der Einzelträger 5 bündig abschließt und eine Ebene bildet. Der Einsatz dieser Füllstoffabdeckung 12 ermöglicht ein rascheres Arbeiten - weil die Einzelträger 5 nicht eingerichtet werden müssen - und insbesonder die Erzielung einer höheren Kantentemperatur. Auch die Füllstoffabdeckung 12 definiert Bewegungsbereiche 10 für die Einzelträger 5. Dazu sind Ausnehmungen 12A vorgesehen. In einer nicht dargestellten Ausbildung weist die Füllstoffabdeckung 12 Markierungslinien entlang der Außenkanten benachbarter Ausnehmungen 12A auf.

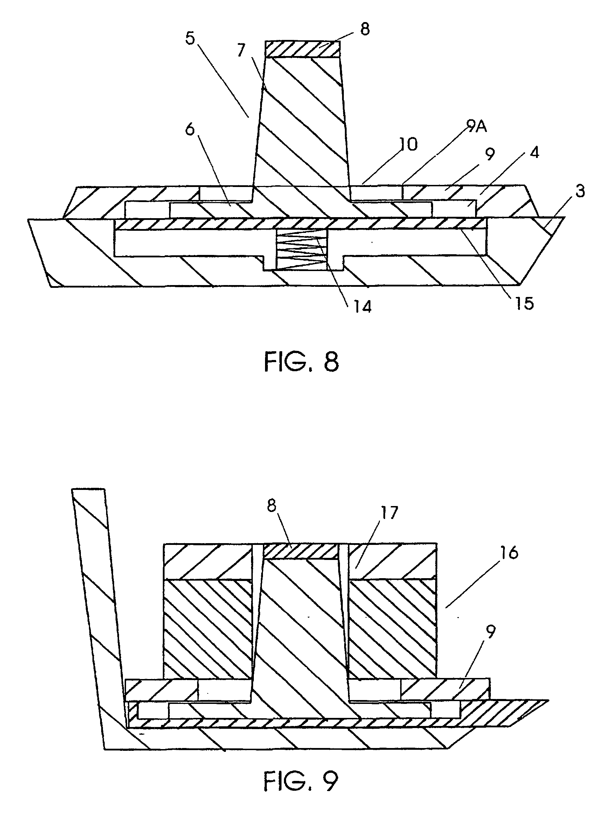

Nach einer in Fig. 8 dargestellten zweiten Ausführungsform des Preßtisches 1 ruht der Sockel 6 auf einer von einer Feder 14 unterstützten Federplatte 15 auf. Sowohl die Feder 14 als auch die Federplatte 15 sind dabei von den Führungstaschen 4 der Führungsplatte 3 aufgenommen und von der Unterseite der Matrize 9 gehalten.

Die federnde Positionierung der Einzelträger 5 ermöglicht neben Vorteilen beim Pressen auch ein einfaches Entfernen der Einzelträger 5 aus den Führungstaschen 4 durch Kippen. Nicht dargestellt, aber bevorzugt realisierbar ist ein Aufruhen der Federplatte 15 auf vier in ihren Randbereichen angeordneten Federn.

Für die Bearbeitung von besonders schmalen Werkstücken 13 sind Aufsteckteile 16 vorgesehen, welche über den Schaft 7 der Einzelträger 5 geschoben werden. Dadurch wird eine verbreiterte Auflagefläche geschaffen. Die Aufsteckteile 16 schließen mit der elastischen Deckschicht 8 des Schaftes 7 bündig ab und bilden mit diesen eine Ebene. Jeder Aufsteckteil 16 umfaßt in seinem oberen Bereich einen elastischen Abschnitt 17. Dieser elastische Abschnitt 17 ist dicker als die elastische Deckschicht 8, um beim Vakuumziehen den Einsatz auch der Feder 14 zu garantieren. Dazu ist das Material des elastischen Abschnittes 17 auch elastischer als jenes der elastischen Deckschicht 8.

Im allgemeinen sind sowohl die Führungsplatte 3 als auch die Matrize 9 und die Federplatte 15 aus atmungsaktivem Material. Aus Gründen erhöhter Festigkeit können sie auch aus Kunststoff oder Aluminium gefertigt sein. Dann sind sie mit einer Vielzahl nicht dargestellter Bohrunge versehen, um den Durchtritt des Vakuums beim Vakuumziehen zu ermöglichen.

Der Preßtisch 1 kann eine Vielzahl unterschiedlich ausgebildeter Werkstücke 13 in einem Arbeitsvorgang aufnehmen. Die Einzelträger 5 werden dabei innerhalb ihrer Bewegungsbereiche 10 in den Randbereichen der Werkstücke 13 derart verschoben, daß ein für das Folieren geeigneter Überstand gebildet wird. Die erzielbaren Minimalabstände benachbarter Einzelträger 5 ermöglichen im Zusammenspiel mit den vorbestimmten Bewegungsbereichen 10 ein Bearbeiten von Werkstücken mit im wesentlichen allen beliebigen Maßen. Zwischen den Ausnehmungen 9A der Matrize 9 können auch nicht dargestellte, weitere Ausnehmungen beliebiger Ausgestaltung vorgesehen sein, insbesondere um ein verbessertes Regulieren der auftretenden Zugkräfte zu ermöglichen.

Um weiters ein Einreißen oder Verfärben der Folie in den Eckbereichen des Preßtisches 1 durch übermäßige Zugbelastung hintan zu halten, werden diese Bereiche durch eingelegte Formteile 18 entschärft. Diese Formteile 18 sind im wesentlichen dreieckförmige Körper mit abgerundeten Außenkanten. Eine noch bessere Reduktion der Zugkräfte in diesen Problemzonen kann erreicht werden, wenn die Formteile 18 idealerweise mit einer oder mehreren Ausfräsungen 19 an ihrem ins Innere des Preßtisches 1 weisenden Flächenbereich versehen sind.

## Patentansprüche

1. Beschichtungspresse zur mehrseitigen Folienbeschichtung von Formplatten, mit einem in die Beschichtungspresse einfahrbaren Preßtisch (1) mit einer Vielzahl von Einzelträgern (5) zur Aufnahme der zu beschichtenden Werkstücke (13), **dadurch gekennzeichnet, daß** jeder Einzelträger (5) zur Aufnahme der Werkstücke (13) innerhalb eines Bewegungsbereiches (10) auf dem Preßtisch (1) horizontal bewegbar angeordnet ist und daß jeder Einzelträger (5) während des Preßvorganges eine Verkürzung seiner Höhe erfährt.

2. Beschichtungspresse nach Anspruch 1, **dadurch gekennzeichnet, daß** jeder Bewegungsbereich (10) um jeden Einzelträger (5) beliebige Größe aufweist.

3. Beschichtungspresse nach Anspruch 1, **dadurch gekennzeichnet, daß** der Bewegungsbereich (10) um jeden Einzelträger (5) gleich groß ist.

4. Beschichtungspresse nach einem der vorgenannten Ansprüche, **dadurch gekennzeichnet, daß** die Abstände einander benachbarter Bewegungsbereiche (10) jeweils gleich groß sind.

5. Beschichtungespresse nach einem der vorgenannten Ansprüche, **dadurch gekennzeichnet, daß** ein Minimalabstand einander benachbarter Bewegungsbereiche (10) vorgesehen ist

6. Beschichtungspresse nach Anspruch 1, **dadurch gekennzeichnet, daß** jeder Einzelträger (5) idente Länge aufweist und aus einem Schaft (7), einem Sockel (6) und einer auf dem Sockel (6) aufruhenden Deckschicht (8) besteht, wobei Schaft (7) und Sockel (6) aus starrem Material und die Deckschicht (8) aus elastischem Material bestehen.

7. Beschichtungspresse nach Anspruch 6, **dadurch gekennzeichnet, daß** jeder Einzelträger (5) in einer auf dem Preßtisch (1) aufruhenden Führungsplatte (3) bewegbar angeordnet ist und daß jeweils der Sockel (6) der Einzelträger(5) von Führungstaschen (4) in der Führungsplatte(3) aufgenommen sind.

8. Beschichtungspresse nach einem der vorgenannten Ansprüche, **dadurch gekennzeichnet, daß** der Sockel (6) des Einzelträgers (5) in der Führungstasche (4) federnd gehalten ist.

9. Beschichtungespresse nach Anspruch 8, **dadurch gekennzeichnet, daß** eine in der Führungstasche (4) angeordnete Kombination aus Feder (14) und Federplatte (15) zur Aufnahme des Sockels (6) vorgesehen ist.

10. Beschichtungspresse nach Anspruch 9, **dadurch gekennzeichnet, daß** die Feder (14) unterhalb der Federplatte (15) zentral angeordnet ist.

11. Beschichtungspresse nach Anspruch 9, **dadurch gekennzeichnet, daß** mehrere Federn, vorzugsweise in den Eckbereichen der Federplatte (15), vorgesehen sind.

12. Beschichtungspresse nach Anspruch 7, **dadurch gekennzeichnet, daß** die Auflagefläche des Sockels (6) in den Führungstaschen (4) größer als sein zugeordneter Bewegungsbereich (10) ist.

13. Beschichtungspresse nach Anspruch 8, **dadurch gekennzeichnet, daß** die Auflagefläche des Sockels (6) rechteckig, mit abgerundeten Ecken oder ganz rund ausgeführt ist.

14. Beschichtungspresse nach einem der vorgenannten Ansprüche, **dadurch gekennzeichnet, daß** über der Führungsplatte (3) eine Matrize (9) mit Ausnehmungen (9A) vorgesehen ist, welche die Bewegungsbereiche (10) der Einzelträger (5) definieren.

15. Beschichtungspresse nach Anspruch 10, **dadurch gekennzeichnet, daß** sowohl die Führungsplatte (3) als auch die Matrize (9) aus atmungsaktivem Material bestehen.

16. Beschichtungspresse nach Anspruch 10, **dadurch gekennzeichnet, daß** sowohl die Führungsplatte (3) als auch die Matrize (9) aus Materialien hoher Festigkeit, vorzugsweise aus Aluminium oder Kunststoff besteht, und mit einer Vielzahl von Bohrungen zum Durchtritt des Vakuums versehen sind.

17. Beschichtungspresse nach Anspruch 6, **dadurch gekennzeichnet, daß** sich der Schaft (7) von der Deckschicht (8) zum Sockel (6) hin erweitert und vorzugsweise die Form eines Pyramidenstumpfes oder eines Kegelstumpfes aufweist.

18. Beschichtungspresse nach Anspruch 6, **dadurch gekennzeichnet, daß** die Deckschicht (8) eine haftende Oberfläche aufweist.

19. Beschichtungspresse nach Anspruch 6, **dadurch gekennzeichnet, daß** jeder Einzelträger (5) aus Metall oder Kunststoff, vorzugsweise aus Polyamid oder Zellamid gefertigt ist.

20. Beschichtungspresse nach Anspruch 14, **dadurch gekennzeichnet, daß** über der Matrize (9) eine Zwischenplatte (11) zur Verkürzung der wirksamen Höhe der Einzelträger (5) vorgesehen ist.

21. Beschichtungspresse nach Anspruch 14, **dadurch gekennzeichnet, daß** über der Matrize (9) eine vorzugsweise elastische Füllstoffabdeckung (12) vorgesehen ist, welche mit ihrer Oberfläche mit der Deckschicht (8) jedes Einzelträgers (5) bündig abschließt.

22. Beschichtungspresse nach den Ansprüchen 21 oder 22, **dadurch gekennzeichnet, daß** sowohl die Zwischenplatte (11) als auch die Füllstoffabdeckung (12) Ausnehmungen (11A,12A) aufweisen, welche mit den Ausnehmungen (9A) der Matrize (9) korrespondieren und die Bewegungsbereiche (10) der Einzelträger (5) definieren.

23. Beschichtungspresse nach Anspruch 22, **dadurch gekennzeichnet, daß** an der Oberfläche der Füllstoffabdeckung Markierungslinien vorgesehen sind, welche die Außenkanten benachbarter, in einer Linie verlaufender Ausnehmungen (12A) verbinden.

24. Beschichtungspresse nach einem der Ansprüche 6, 7 oder 8, **dadurch gekennzeichnet, daß** Aufsteckteile (16) für die Einzelträger (5) vorgesehen sind.

25. Beschichtungspresse nach Anspruch 24, **dadurch gekennzeichnet, daß** ein Aufsteckteil (16) den gesamten Einzelträger (5) umfaßt und daß es an seiner Oberseite mit der Deckschicht bündig abschließt.

26. Beschichtungspresse nach Anspruch 25, **dadurch gekennzeichnet, daß** der Aufsteckteil (16) in seinem oberen Bereich einen elastischen Abschnitt (17) aufweist.

27. Beschichtungspresse nach Anspruch 26, **dadurch gekennzeichnet, daß** der elastische Abschnitt (17) größere Dicke als die elastische Deckschicht (8) aufweist.

28. Beschichtungspresse nach Anspruch 27, daß das Material des elastischen Abschnittes (17) elastischer als jenes der elastischen Deckschicht (8) ist.

29. Beschichtungspresse nach Anspruch 14, **dadurch gekennzeichnet, daß** zwischen benachbarten Ausnehmungen (9A) in der Matrize (9) weitere Ausnehmungen zur Regulierung der Zugbeanspruchung vorgesehen sind.

30. Beschichtungspresse nach Anspruch 1, **dadurch gekennzeichnet, daß** in den Eckbereichen des Preßtisches (1) Formteile (18) mit im wesentlichen dreieckförmigem Querschnitt zur Reduzierung der Zugbelastung vorgesehen sind.

31. Beschichtungspresse nach Anspruch 30, **dadurch gekennzeichnet, daß** jeder Formteil (18) an seiner den Ecken des Preßtisches (1) abgewandten Seite mit wenigstens einer Einfräsung (19) versehen ist.

32. Verfahren zum mehrseitigen Folienbeschichten von Formplatten mittels einer Beschichtungspresse nach einem oder mehreren der vorgenannten Ansprüche, wobei in einer Preßkammer die über den am Preßtisch aufruhenden Formplatten angeordnete Folie erst erhitzt und dann mittels Anlegen von Vakuum und Druck foliert werden, **dadurch gekennzeichnet, daß** die zu beschichtenden Werkstücke (13) beabstandet voneinander auf die Einzelträger (5) aufgelegt werden, wonach die sich in den Randbereichen der Werkstücke (13) befindlichen Einzelträger (5) in ihren Bewegungsbereichen (10) solange verschoben werden, bis die korrespondierenden Einzelträger (5) gegenüber den Rändern der Werkstücke (13) entsprechend zurückgesetzt sind, und daß nach Einfahren des Preßtisches (1) in die Preßkammer über die Periode des Vakuumziehens der Abstand Werkstücke-Preßtischauflage verringert wird.

33. Verfahren nach Anspruch 32, **dadurch gekennzeichnet, daß** zwischen abgeschlossenem Vakuumziehen und darauffolgendem Anlegen von Druck ein Verzögerungszeitraum vorgesehen ist.

34. Verfahren nach Anspruch 33, **dadurch gekennzeichnet, daß** bei größeren Leerbereichen zwischen aufgelegten Werkstücken in diesen Leerbereichen Formstücke angeordnet werden.

## Claims

1. Coating press for multi-side film coating of form boards, having a press table (1) which can be moved into the coating press and having a multitude of individual support means (5) for supporting the workpieces (13) to be coated, **characterized in that** each individual support means (5) for supporting the workpieces (13) is arranged to be moveable horizontally within a range (10) of movement on the press table (1) and that each individual support means (5) undergoes a shortening of its height during the pressing process.

2. Coating press according to claim 1, **characterized in that** each range (10) of movement around each individual support means is of any desired size.

3. Coating press according to claim 1, **characterized in that** the range (10) of movement around each individual support means (5) has the same size.

4. Coating press according to claim 1, **characterized in that** the distances of mutually adjacent ranges (10) of movement are equal.

5. Coating press according to any preceding claim, **characterized in that** adjacent ranges (19) of movement are separated by means of a minimum distance.

6. Coating press according to claim 1, **characterized in that** each individual support means (5) has identical height and consists of a base (6), a shaft (7) and a surface layer (8) located on the shaft (7) and that the shaft (7) and the base (6) consist of rigid materials and that the surface layer (8) consists of elastic materials.

7. Coating press according to claim 6, **characterized in that** each individual support means (5) is moveable arranged within a guiding plate (3) resting on the pressing table (1) and that each of the bases (6) of the individual support means (5) is arranged within guide openings (4) of the guiding plate (3).

8. Coating press according to any preceding claim, **characterized in that** the base (6) of the individual support means (5) is spring-mounted in the guide opening (4).

9. Coating press according to claim 8, **characterized in that** within the guide opening (4) a combination consisting of a spring (14) and a spring plate (15) is provided for taking up the base (6).

10. Coating press according to claim 9, **characterized in that** the spring (14) is arranged centrally under the spring plate (15).

11. Coating press according to claim 9, **characterized in that** several springs (15) are provided, particularly in the corner sectors of the spring plate (15).

12. Coating press according to claim 7, **characterized in that** the contact area of the base (6) arranged within the guide openings (4) is larger than the corresponding range (10) of movement.

13. Coating press according to claim 8, **characterized in that** the contact area of the base (6) is designed rectangular, with rounded corners or completely circular.

14. Coating press according to any preceding claim, **characterized in that** above the guiding plate (3) there is provided a template (9) having breakouts (9A) which define the ranges (10) of movement of the individual support means (5).

15. Coating press according to claim 10, **characterized in that** the guiding plate (3) as well as the template (9) are made of porous materials.

16. Coating press according to claim 10, **characterized in that** the guiding plate (3) as well as the template (9) are made of high strength materials, especially aluminium or plastics, and are provided with a multitude of openings for vacuum flow.

17. Coating press according to claim 6, **characterized in that** the shaft (7) enlarges from the surface layer (8) to the base (6), having especially the form of a pyramidal or conical frustrum.

18. Coating press according to claim 6, **characterized in that** the surface layer (8) has an adhering surface.

19. Coating press according to claim 6, **characterized in that** each individual support means (5) is made of metal or plastics, especially polyamide or cellulose amide.

20. Coating press according to claim 14, **characterized in that** above the template (9) there is provided an intermediate plate (11) to shorten the effective height of the individual support means (5).

21. Coating press according to claim 14, **characterized in that** above the template (3) there is provided an especially elastic filler covering (12), the surface of which is flush with the surface of the surface layer (8) of each individual support means (5).

22. Coating press according to one of the claims 21 or 22, **characterized in that** the intermediate plate (11) as well as the filler covering (12) have breakouts (11A, 12A) corresponding to the breakouts (9A) of the template (9) and defining the ranges (10) of movement of the individual support means (5).

23. Coating press according to claim 22, **characterized in that** the surface of the filler covering is provided with marker lines connecting the borders of adjacent breakouts (12A) in a line.

24. Coating press according to claims 6,7 or 8, **characterized in that** plug-on parts (16) for the individual support means (5) are provided.

25. Coating press according to claim 24, **characterized in that** the plug-on part (16) surrounds the entire individual support means (5) and that it terminates at the top flush with the surface layer.

26. Coating press according to claim 25, **characterized in that** the upper region of the plug-on part (16) comprises an elastic section (17).

27. Coating press according to claim 26, **characterized in that** the elastic section (17) is thicker than the elastic surface layer (8).

28. Coating press according to claim 27, **characterized in that** the elastic section (17) materials is more elastic than the materials of the elastic surface layer (8).

29. Coating press according to claim 14, **characterized in that** between adjacent breakouts (9A) of the template (9) further breakouts are provided for regulating the tensional stress forces.

30. Coating press according to claim 1, **characterized in that** form parts (18) having an essentially triangular cross section are provided in the corner regions of the press table (1) for reducing tensional stress forces.

31. Coating press according to claim 30, **characterized in that** each form part (18) has at least one milled cut on its side not facing the corners of the press table (1).

32. Process for multi-side film coating of form boards ba means of a press table according to one or several of the preceding claims, wherein the film arranged in a press chamber above the form boards restig on the press table, is heated first end then used to foil the form boards by means of applying vacuum and pressure, **characterized in that** the workpieces (13) to be coated are placed with distance on the individual support means (5), after which the individual support means (5) located in the border region of the workpieces (13) are shifted in their ranges (10) of movement as long as the corresponding individual support means (5) are set back appropriately with respect to the edges of the workpieces (13), and that after moving the press table (1) into the press chamber, the distance between the workpieces and the press table support is reduced for the duration of the vacuum drawing process.

33. Process according to claim 32, **characterized in that** a time delay is scheduled between the completed step of vacuum drawing and the subsequent step of applying pressure.

34. Process according to claim 33, **characterized in that** form parts are arranged within large empty spaces between mounted workpieces.

## Revendications

1. Presse de revêtement pour le revêtement par film sur plusieurs côtés de plaques moulées, comportant une table de presse (1) insérable dans la presse de revêtement, avec une multitude de supports individuels (5) destinés à recevoir les pièces (13) à revêtir, **caractérisée en ce que** chaque support individuel (5) destiné à recevoir les pièces (13) est disposé de manière à pouvoir bouger horizontalement à l'intérieur d'un secteur de mobilité (10) sur la table de presse (1) et que chaque support individuel (5) subit une réduction de sa hauteur pendant l'opération de presse.

2. Presse de revêtement selon la revendication 1, **caractérisée en ce que** chaque secteur de mobilité (10) autour de chaque support individuel (5) présente n'importe quelle dimension.

3. Presse de revêtement selon la revendication 1, **caractérisée en ce que** chaque secteur de mobilité (10) autour de chaque support individuel (5) est de dimension identique.

4. Presse de revêtement selon une des revendications précédentes, **caractérisée en ce que** les distances entre les secteurs de mobilité (10) voisins l'un de l'autre sont respectivement identiques.

5. Presse de revêtement selon une des revendications précédentes, **caractérisée en ce qu'**une distance minimale entre les secteurs de mobilité (10) voisins l'un de l'autre est prévue.

6. Presse de revêtement selon la revendication 1, **caractérisée en ce que** chaque support individuel (5) présente une longueur identique et consiste en une tige (7), un socle (6) et une couche de couverture (8) reposant sur le socle (6), la tige (7) et le socle (6) consistant en une matière rigide et la couche de couverture (8) en une matière élastique.

7. Presse de revêtement selon la revendication 6, **caractérisée en ce que** chaque support individuel (5) est disposé de manière à pouvoir bouger dans une plaque de guidage (3) reposant sur la table de presse (1) et que les socles (6) des supports individuels (5) des poches de guidage (4) sont respectivement pris dans la plaque de guidage (3).

8. Presse de revêtement selon une des revendications précédentes, **caractérisée en ce que** le socle (6) du support individuel (5) est maintenu en faisant ressort dans la poche de guidage (4).

9. Presse de revêtement selon la revendication 8, **caractérisée en ce qu'**une combinaison d'un ressort (14) et d'une plaque à ressort (16) disposée dans la poche de guidage (4) est prévue pour recevoir le socle (6).

10. Presse de revêtement selon la revendication 9, **caractérisée en ce que** le ressort (14) est disposé au centre sous la plaque à ressort (16).

11. Presse de revêtement selon la revendication 9, **caractérisée en ce que** plusieurs ressorts sont prévus de préférence dans les zones des coins de la plaque à ressort (16).

12. Presse de revêtement selon la revendication 7, **caractérisée en ce que** la surface d'appui du socle (6) dans les poches de guidage (4) est supérieure à son secteur de mobilité (10) associé.

13. Presse de revêtement selon la revendication 8, **caractérisée en ce que** la surface d'appui du socle (6) est d'une forme rectangulaire avec des coins arrondis ou totalement ronde.

14. Presse de revêtement selon une des revendications précédentes, **caractérisée en ce que**, sur la plaque de guidage (3) est prévue une matrice (9) avec des évidements (9A) qui définissent les secteurs de mobilité (10) des supports individuels (5).

15. Presse de revêtement selon la revendication 10, **caractérisée en ce qu'**aussi bien la plaque de guidage (3) que la matrice (9) sont en matière à respiration active.

16. Presse de revêtement selon la revendication 10, **caractérisée en ce qu'**aussi bien la plaque de guidage (3) que la matrice (9) sent en matière à haute résistance, de préférence en aluminium ou en matière plastique et sont pourvues d'une multitude d'alésages pour laisser passer le vide.

17. Presse de revêtement selon la revendication 6, **caractérisée en ce que** la tige (7) s'élargit de la couche de couverture (8) vers le socle (6) et présente de préférence la forme d'un tronc pyramidal ou d'un tronc conique.

18. Presse de revêtement selon la revendication 6, **caractérisée en ce que** la couche de couverture (8) présente une surface collante.

19. Presse de revêtement selon la revendication 6, **caractérisée en ce que** chaque support individuel (5) est fabriqué en métal ou en matière plastique, de préférence en polyamide ou céliamide.

20. Presse de revêtement selon la revendication 14, **caractérisée en ce que**, sur la matrice (9), une plaque intermédiaire (11) est prévue pour raccourcir la hauteur utile des supports individuels (5).

21. Presse de revêtement selon la revendication 14, **caractérisée en ce qu'**est prévu sur la matrice (9) un recouvrement en matière de remplissage (12) de préférence élastique qui se termine en affleurant avec sa surface avec la couche de couverture (8) de chaque support individuel (5).

22. Presse de revêtement selon les revendications 21 ou 22, **caractérisée en ce qu'**aussi bien la plaque intermédiaire (11) que le recouvrement en matière de remplissage (12) présentent des évidements (11A, 12A) qui coïncident avec les évidements (9A) de la matrice (9) et définissent les secteurs de mobilité (10) des supports individuels (5).

23. Presse de revêtement selon la revendication 22, **caractérisée en ce qu'**à la surface du recouvrement en matière de remplissage sont prévues des lignes de marquage qui relient les bords extérieurs des évidements (12A) voisins orientés suivant une ligne.

24. Presse de revêtement selon une des revendications 6, 7 ou 8, **caractérisée en ce que** des pièces d'emboîtement (16) sont prévues pour les supports individuels (5).

25. Presse de revêtement selon la revendication 24, **caractérisée en ce qu'**une pièce d'emboîtement (16) entoure l'ensemble du support individuel (5) et qu'elle se termine sur sa face supérieure en affleurant avec la couche de recouvrement.

26. Presse de revêtement selon la revendication 25, **caractérisée en ce que** la pièce d'emboîtement (16) présente une section élastique (17) dans sa partie supérieure.

27. Presse de revêtement selon la revendication 26, **caractérisée en ce que** la section élastique (17) présente une épaisseur supérieure à la couche de recouvrement élastique (8).

28. Presse de revêtement selon la revendication 27, **caractérisée en ce que** la matière de la section élastique (17) est plus élastique que celle de la couche de recouvrement élastique (8).

29. Presse de revêtement selon la revendication 14, **caractérisée en ce qu'**entre les évidements voisins (9A) dans la matrice (9), d'autres évidements sont prévus pour la régulation de la sollicitation à la traction.

30. Presse de revêtement selon la revendication 1, **caractérisée en ce que** sont prévues, dans les zones des coins de la table de presse (1), des pièces formées (18) d'une section substantiellement triangulaire pour réduire la sollicitation à la traction.

31. Presse de revêtement selon la revendication 30, **caractérisée en ce que** chaque pièce moulée (18) est pourvue sur sa face détournée des coins de la table de presse (1) d'au moins un fraisage (19).

32. Procédé pour le revêtement par film sur plusieurs côtés de plaques moulées dans une presse de revêtement selon une ou plusieurs des revendications précédentes, le film disposé dans une chambre de presse sur les plaques moulées reposant sur la table de presse étant d'abord chauffé et ensuite posé au moyen d'installations de vide et de pression, **caractérisé en ce que** les pièces (13) à revêtir sont déposées écartées l'une de l'autre sur les supports individuels (5), après quoi les supports individuels (5) se trouvant dans les zones des bords des pièces (13) sont déplacés dans leurs secteurs de mobilité (10) jusqu'à ce que les supports individuels correspondants (5) soient reculés en conséquence par rapport aux bords des pièces (13) et que la distance pièces-appui sur la table de presse soit diminuée après l'introduction de la table de presse (1) dans la chambre de presse pendant la période de traction du vide.

33. Procédé selon la revendication 32, **caractérisé en ce qu'**entre la fin de la période de traction par le vide et l'application consécutive de pression, une période de retardement est prévue.

34. Procédé selon la revendication 33, **caractérisé en ce qu'**en cas de grands intervalles vides entre les pièces déposées, des pièces moulées sont placées dans ces intervalles vides.
